# EUROPÄISCHE PATENTSCHRIFT

(11) **EP 1 827 746 B1**
(45) Veröffentlichungstag und Bekanntmachung des Hinweises auf die Patenterteilung: **14.08.2013**
(21) Anmeldenummer: 05801514.0
(22) Anmeldetag: 13.10.2005
(51) Int. Cl.: B23H 7/26, B23H 7/10, B23H 7/28, B23H 7/38

(54) **VERFAHREN ZUM BEARBEITEN EINES WERKSTÜCKS**
METHOD FOR MACHINING A WORKPIECE
PROCEDE POUR USINER UNE PIECE

(30) Priorität: 15.12.2004 DE 102004060290
(43) Veröffentlichungstag der Anmeldung: 05.09.2007
(73) Patentinhaber: ROBERT BOSCH GMBH, 70442 Stuttgart (DE)
(72) Erfinder: SCHOEPF, Martin, 70499 Stuttgart (DE); SCHAEFER, Bernd, 71636 Ludwigsburg (DE)
(86) Internationale Anmeldenummer: PCT/EP2005/055233
(87) Internationale Veröffentlichungsnummer: WO 2006/063882

(56) Entgegenhaltungen:
- WO-A-03/041900
- PATENT ABSTRACTS OF JAPAN Bd. 004, Nr. 164 (M-041), 14. November 1980 (1980-11-14) & JP 55 112726 A (FANUC LTD), 30. August 1980 (1980-08-30)
- PATENT ABSTRACTS OF JAPAN Bd. 2002, Nr. 09, 4. September 2002 (2002-09-04) & JP 2002 154013 A (MITSUBISHI ELECTRIC CORP), 28. Mai 2002 (2002-05-28)

## Beschreibung

Die Erfindung betrifft ein Verfahren zum Bearbeiten eines Werkstücks und eine Vorrichtung zum Bearbeiten eines Werkstücks nach dem Oberbegriff der Ansprüche 1 und 7.
Ein derartiges Verfahren und eine derartige Vorrichtung sind aus WO03041900 bekannt.

### Stand der Technik

Durch einen sogenannten EDM (Electrical Discharge Mashining)- Prozess ist es möglich, an einem Werkstück einen Materialabtrag hervorzurufen und somit in dieses Werkstück ein Loch zu bohren. Bei einer derartigen elektroerosiven Bearbeitung des Werkstücks wird zwischen einer Elektrode und einer Bearbeitungsstelle des Werkstücks ein elektrisches Feld angelegt, außerdem wird dieser Bearbeitungsstelle eine geeignete Bearbeitungsflüssigkeit zugeführt.

In der WO 03/041900 A2 wird ein EDM-Verfahren mit Magnetspaltregelung beschrieben. Hierbei wird durch ein stationäres Magnetfeld ein Abstand zwischen der Elektrode und der Bearbeitungsstelle des Werkstücks geregelt. Dabei ist vorgesehen, dass die Elektrode als ein von einem Strom durchflossener Leiter ausgebildet und innerhalb des Magnetfelds angeordnet ist. Aufgrund einer durch das Magnetfeld hervorgerufenen und auf den Leiter wirkenden Lorentz-Kraft wird dieser Leiter innerhalb einer vertikal angeordneten Rundführung horizontal ausgelenkt, so dass dieser eine Axialbewegung ausführt. Dadurch wird zwischen der Elektrode und dem Werkstück in Abhängigkeit des fließenden Stroms ein optimaler Abstand eingestellt. Je größer dieser Strom ist, desto größer ist die auf den Leiter wirkende Lorentz-Kraft und eine damit verbundene Auslenkung. Ein Ende des Leiters entfernt sich demnach axial umso mehr von dem Werkstück, je größer der durch den Leiter fließende Strom ist.

Vor diesem Hintergrund werden ein Verfahren und eine Vorrichtung mit den Merkmalen der unabhängigen Patentansprüche vorgestellt.

### Vorteile der Erfindung

Bei dem erfindungsgemäßen Verfahren zum Bearbeiten eines Werkstücks ist vorgesehen, dass ein Leiter entlang seiner Längsachse von einem sich zeitlich verändernden Strom durchflossen wird und durch eine obere Führung und eine untere Führung geführt wird. Zwischen der oberen Führung und der unteren Führung wird ein Magnetfeld erzeugt, wobei sich die obere Führung in einem Abstand y(o) oberhalb des Magnetfelds und die untere Führung in einem Abstand y(u) unterhalb des Magnetfelds befindet. Aufgrund des auf den Strom innerhalb des Leiters wirkenden Magnetfelds wirkt auf diesen Leiter eine Lorentz-Kraft, die den Leiter zu einer mindestens eindimensionalen Bewegung oder Schwingung anregt.

Dabei kann der von dem Strom durchflossene Leiter durch ein sich bspw. drehendes Magnetfeld in elliptische oder kreisförmige Bewegung versetzt werden. Ein derartiges rotierendes Magnetfeld kann durch mindestens einen sich um den Leiter drehenden Permanentmagneten oder durch eine Anzahl senkrecht zu dem Leiter angeordneter Elektromagnete, die in geeigneter Weise bestromt werden, erzeugt werden.

Das Magnetfeld kann bei Durchführung des Verfahrens bei einer bspw. konstanten Winkelgeschwindigkeit mindestens einmal um 360° oder um ein geeignetes Vielfaches von 360° gedreht werden. Somit können im Falle einer elektroerosiven Bearbeitung eines metallischen Werkstücks in dieses Werkstück zylindersymmetrische Löcher gebohrt werden, wobei Austrittsöffnungen derartiger Löcher kreisförmig ausgebildet sind und größere Radien als kreisförmige Eintrittsöffnungen dieser Löcher aufweisen.

Es ist auch denkbar, ein stationäres Magnetfeld schrittweise zwischen einzelnen Positionen zu drehen. Dabei wird der Leiter zunächst zu einer Schwingung einer ersten Richtung angeregt, wobei in das Werkstück ein elliptisches Loch, dessen große Halbachse entlang dieser ersten Richtung orientiert ist, gebohrt wird. Danach wird das stationäre Magnetfeld gedreht, so dass der Leiter Schwingungen in einer zweiten Richtung ausführt. Diese Vorgehensweise kann unter weiteren Ausrichtungen des stationären Magnetfelds unter verschiedenen Winkeln fortgesetzt werden. Somit entsteht eine Überlagerung von zwei oder mehreren elliptischen Löchern bzw. ein umfänglich mehrere unter Winkeln versetzte Bögen aufweisendes Loch.

Jener Bereich des Leiters, der zwischen der oberen und unteren Führung geführt wird und sich innerhalb des Magnetfeldes befindet, wobei eine Längsachse des Leiters weitgehend senkrecht zu dem Magnetfeld orientiert ist, wird durch Lorentz-Kräfte als Produkt einer Wechselwirkung des durch den Leiter fließenden Stroms und dem Magnetfeld zur Bewegung angeregt. Dadurch, dass der Leiter zwischen der oberen und der unteren Führung geführt wird, wird auch das Ende des Leiters, das einer Bearbeitungsstelle des Werkstücks zugewandt ist und sich unterhalb der unteren Führung befindet in eine Bewegung oder Schwingung versetzt. Durch geeignete Wahl jeweils einer Position der unteren und der oberen Führung wird eine Amplitude der Bewegung des Leiters zwischen den beiden Führungen und demnach auch eine Amplitude der Bewegung des Endes des Leiters eingestellt, wodurch eine Größe der Bearbeitungsstelle an dem Werkstück qualitativ und/oder quantitativ geregelt wird. Bei Durchführung des Verfahrens können die Positionen der beiden Führungen und somit die Abstände y(o) und y(u) verändert werden.

Durch den in dem Leiter fließenden Strom ergibt sich, dass zwischen dem Ende des Leiters und einer Bearbeitungsstelle des Werkstücks ein elektrisches Feld anliegt. Zudem wird der Bearbeitungsstelle typischerweise eine Bearbeitungsflüssigkeit, bspw. ein Dielektrikum, zugeführt. Bei einem derartigen EDM (Electrical Discharge Machining)-Verfahren wird in der Bearbeitungsstelle an dem Werkstück Material abgetragen. Das Werkstück kann somit bspw. zum Bohren von Löchern elektroerosiv bearbeitet werden.

Konische Mikrobohrungen können mittels herkömmlicher EDM-Verfahren nur eingeschränkt hergestellt werden. Momentan können im Rahmen einer Serienproduktion Konizitäten bis ca. 15 µm entsprechend dem Betrag einer Differenz eines Austrittsdurchmessers abzüglich eines Eintrittsdurchmessers des Bohrlochs auf eine Länge von 1 mm des Bohrlochs reproduzierbar hergestellt werden, dies entspricht einem k-Faktor von 1,5. Sind jedoch aufgrund funktioneller Forderungen Konizitäten mit einem k-Faktor größer 1,5, bspw. für Löcher von Einspritzdüsen, erforderlich, so können derartige Löcher bspw. durch Laserbohren hergestellt werden. Allerdings sind beim Laserbohren eine Prozessstabilität und eine Lochqualität in der Regel nicht zufriedenstellend.

Mit dem vorliegenden Verfahren ist es nunmehr möglich, Löcher mit sehr großen Konizitäten herzustellen. Derartige Löcher können einen k-Faktor von bis zu 10,0 aufweisen.

Bei diesem Verfahren übernimmt der Leiter eine Funktion einer Elektrode zur elektroerosiven Behandlung des Werkstücks. Der Leiter kann dabei drahtförmig ausgebildet und in Längsrichtung auf die Bearbeitungsstelle des Werkstücks ausgerichtet sein. Dabei kann das Ende des Leiters zu einer Oberfläche des Werkstücks einen weitgehend rechten Winkel einnehmen, erforderlichenfalls kann das Ende des Leiters jedoch auch schräg zu der Oberfläche des Werkstücks orientiert sein.

Das vorliegende Verfahren hat den Vorteil, dass eine Schwingung oder Auslenkung des Leiters und insbesondere des Endes des Leiters, das der Bearbeitungsstelle des Werkstücks zugewandt ist, ohne zusätzliche mechanische Mittel, die den Leiter unmittelbar beaufschlagen, realisiert wird. Somit können Bewegungen des Leiters schnell und flexibel, ohne durch eine Trägheit derartiger mechanischer Mittel eingeschränkt zu werden, in einfacher Weise beeinflusst werden. Der Leiter kann dabei in Bewegungen mit vergleichsweise großen Drehzahlen versetzt werden.

Des weiteren kann in dem Leiter über eine Quelle der sich verändernde Strom bereitgestellt werden. Diese Quelle kann über parallele Anordnung eines statischen Impulsgenerators mit Kondensatoren über einen Schwingkreis einen gepulsten Strom mit einer sich ändernden Richtung erzeugen, so dass der Leiter dadurch bereits in einem statischen Magnetfeld ausgelenkt wird.

Die erfindungsgemäße Vorrichtung zum Bearbeiten eines Werkstücks weist einen Leiter, eine obere Führung und eine untere Führung auf, durch die der Leiter geführt ist und zwischen denen sich ein durch mindestens einen Magneten erzeugtes Magnetfeld befindet, wobei die obere Führung in einem Abstand y(o) oberhalb des Magnetfelds und die untere Führung in einem Abstand y(u) unterhalb des Magnetfelds angeordnet ist. Diese Vorrichtung ist dazu ausgebildet, den Leiter in eine Bewegung oder Schwingung zu versetzen und kann in eine herkömmliche Erodiermaschine eingebaut oder bei einer derartigen Erodiermaschine eingesetzt werden. In Gegenwart einer Bearbeitungsflüssigkeit ist es somit möglich, an dem Werkstück konische Mikrobohrungen mit vergleichsweise großen k-Faktoren herzustellen. Es ist auch denkbar, dass die vorliegende Vorrichtung durch Ergänzung einer geeigneten Zuführung für die Bearbeitungsflüssigkeit eine Erodiermaschine bildet.

Die Vorrichtung kann bspw. mindestens einen um den Leiter drehbaren Magneten aufweisen. Es können hierfür somit beliebige Permanent- oder Elektromagneten zum Einsatz kommen, die sich in geeigneter Weise relativ zu dem Leiter bewegen oder durch geeignete Bestromung im Bereich des Leiters ein sich in zwei Raumrichtungen veränderndes Magnetfeld erzeugen.

Die Vorrichtung kann mit einer Quelle zur Bereitstellung eines sich zeitlich verändernden, durch den Leiter fließenden Stroms ausgestattet sein. Die Quelle kann eine parallele Anordnung eines statischen Impulsgenerators mit Kondensatoren aufweisen und über einen Schwingkreis einen gepulsten Strom erzeugen.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Ansprüche zu verlassen.

### Zeichnung

Die Erfindung ist anhand von Ausführungsbeispielen in der Zeichnung schematisch dargestellt und wird im folgenden unter Bezugnahme auf die Zeichnung ausführlich beschrieben.
- Figur 1: zeigt in schematischer Darstellung eine erste Ausführungsform einer erfindungsgemäßen Vorrichtung.
- Figur 2: zeigt erste Ausführungsbeispiele von Eintrittsund Austrittsöffnungen von Bohrlöchern in schematischer Darstellung.
- Figur 3: zeigt in schematischer Darstellung eine technische Umsetzung einer erfindungsgemäßen Vorrichtung.
- Figur 4: zeigt weitere Beispiele von Eintritts- und Austrittsöffnungen von Bohrungen in schematischer Darstellung.

Die Figuren werden zusammenhängend und übergreifend beschrieben, gleiche Bezugszeichen bezeichnen gleiche Bauteile.

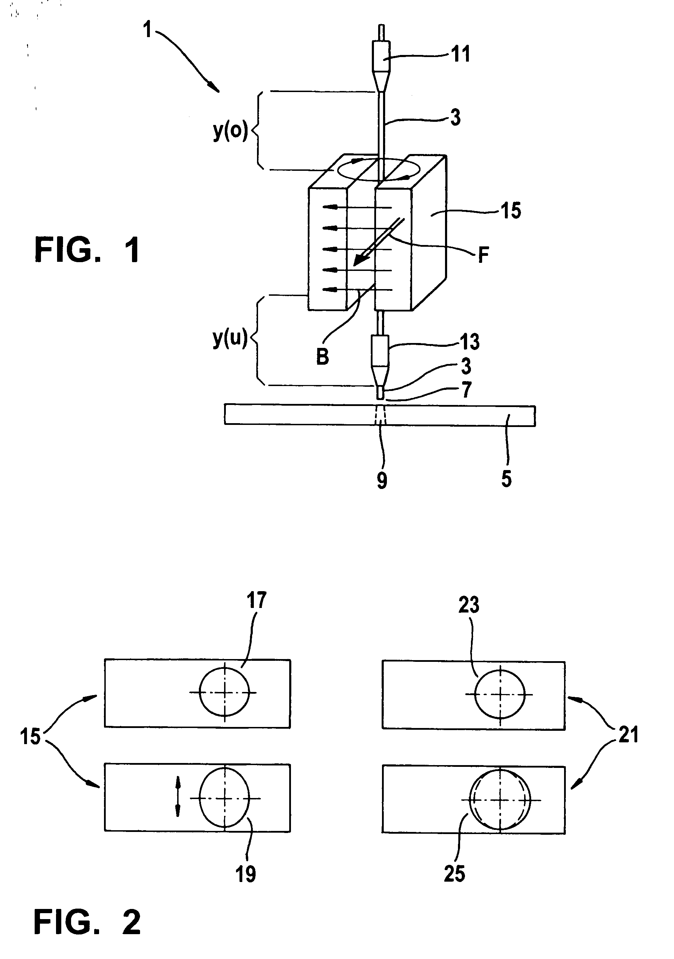

Die in Figur 1 schematisch dargestellte Vorrichtung 1 weist einen abschnittsweise dargestellten, drahtförmigen Leiter 3 auf, der zur elektroerosiven Bearbeitung eines Werkstücks 5 ausgebildet ist. Bei dieser elektroerosiven Bearbeitung bzw. EDM (Electrical Discharge Machining)-Bearbeitung ist vorgesehen, dass durch den Leiter 3 ein sich zeitlich verändernder Strom fließt, so dass zwischen einem Ende 7 des Leiters 3 und einer Bearbeitungsstelle des Werkstücks 5 ein elektrisches Feld anliegt. Durch Zuführung einer geeigneten Bearbeitungsflüssigkeit, bspw. eines Dielektrikums, kann an dem Werkstück 5 ein Materialabtrag hervorgerufen werden, so dass in das Werkstück ein Loch 9 gebohrt wird.

Der Leiter 3 dient bei diesem Verfahren demnach als Elektrode. Des weiteren wird der Leiter 3 zwischen einer oberen Führung 11 und einer unteren Führung 13 der Vorrichtung 1 geführt. Zwischen diesen beiden Führungen 11, 13 befinden sich zwei schematisch dargestellte Magnete 15, die den Leiter 3 umschließen. Ein durch die Pfeile angedeutetes, von den Magneten 15 erzeugtes Magnetfeld B ist senkrecht zu einer Längsachse des Leiters 3 orientiert.

Fließt durch den Leiter 3 der sich zeitlich veränderbare Strom, so wird auf die in dem Leiter 3 fließende elektrische Ladung senkrecht zu dem Magnetfeld sowie senkrecht zu einer Richtung, in der die Ladung fließt, eine Lorentz-Kraft F in Richtung des Doppelpfeils hervorgerufen. Dies führt dazu, dass der Leiter 3 senkrecht zu seiner Längsachse bzw. axial in eine Bewegung oder Schwingung versetzt wird, wodurch auch das Ende 7 des Leiters 3 relativ zu dem Werkstück 5 in eine Bewegung oder Schwingung versetzt.

Falls sich das Magnetfeld B in zwei Raumrichtungen senkrecht zu der Längsachse des Leiters 3 verändert, so wird der Leiter 3 in eine axiale Bewegung versetzt, ebenfalls wird auch das Ende 7 des Leiters 3 in eine Bewegung versetzt bzw. relativ zu dem Werkstück 5 zu einer zweidimensionalen Schwingung angeregt.

Dies wird im vorliegenden Beispiel dadurch erreicht, dass die Magnete 15 eine Drehung um den Leiter 3 ausführen. Mit dieser Vorrichtung 1 kann unter erheblicher Reduzierung der Prozesszeit in das Werkstück 5 ein konisches Loch 9 hoher Qualität mit vergleichsweise großem k-Faktor gebohrt werden. Die Bewegungen des Leiters 3 werden dabei ohne träge oder anfällige mechanische Mittel erzeugt.

Das Magnetfeld B ist zwischen der oberen Führung 11 und der unteren Führung 13 installiert. Neben den elektromagnetischen Parametern, also neben einer Stärke des Magnetfelds B, seiner Richtung und seiner zeitlichen Änderung in zwei Raumausrichtungen sowie einer geeigneten zeitlichen Änderung des durch den Leiter 3 fließenden Stroms, ist ein oberer Abstand y(o) zwischen der oberen Führung 11 und dem Magnetfeld B und ein unterer Abstand y(u) zwischen dem Magnetfeld B und der unteren Führung 13 von Bedeutung. Durch den Abstand der beiden Führungen 11, 13 wird eine Auslenkung bzw. Amplitude des zwischen diesen Führungen 11, 13 befindlichen Abschnitts des Leiters 3 sowie eine Amplitude des sich ebenfalls bewegenden Endes 7 des Leiters 3 beeinflusst. Diese beiden Abstände y(o) und y(u) sind durch Veränderung der Positionen der beiden Führungen 11, 13 ebenfalls veränderbar. Somit kann die Schwingungsanregung oder eine translatorische Bewegung des Endes 7 des Leiters 3 an der Bearbeitungsstelle des Werkstücks 5, an dem das Loch 9 entsteht, in geeigneter Weise beeinflusst werden.

Figur 2 zeigt in schematischer Darstellung links oben eine Eintrittsöffnung 17 und links unten eine Austrittsöffnung 19 eines Bohrlochs in einem Werkstück 15, das mit einem EDM-Verfahren mit einer wie in Figur 1 gezeigten Vorrichtung 1 mit einem räumlich unveränderten Magnetfeld und mit einem sich in dem Leiter 3 zeitlich veränderndem Strom bearbeitet wurde. Das rechts abgebildete Werkstück 21 wurde mit einem EDM-Verfahren bearbeitet, bei dem eine Elektrode bzw. ein Leiter durch eine wie in der Figur 1 vorgestellte Vorrichtung 1 durch ein sich in zwei Raumrichtungen veränderndes Magnetfeld in zwei Raumrichtungen ausgelenkt wurde. Hierzu ist rechts oben eine Eintrittsöffnung 23 und rechts unten eine Austrittsöffnung 25 eines Bohrlochs in diesem Werkstück 21 dargestellt.

Die Eintrittsöffnung 17 des Bohrlochs des links abgebildeten Werkstücks 15 ist rund, wohingegen die Austrittsöffnung 19 oval ausgebildet ist. Dies wurde dadurch erreicht, dass durch den Leiter 3 bzw. die Elektrode ein sich zeitlich verändernder Strom bei statischem Magnetfeld geleitet wurde, so dass ein Ende des Leiters aufgrund einer daraus resultierenden Lorentz-Kraft eine Schwingung oder Bewegung in Richtung des Doppelpfeils ausführte.

Bei dem zweiten Werkstück 21, bei dem zur Herstellung des darin befindlichen Bohrlochs der Leiter 3 zusätzlich einem rotierenden Magnetfeld ausgesetzt wurde, ist sowohl die Eintrittsöffnung 23 als auch die Austrittsöffnung 25 rund, wobei die Austrittsöffnung 25 einen größeren Durchmesser als die Eintrittsöffnung 23 aufweist. Dies wurde dadurch erreicht, dass neben einer geeigneten geometrischen und magnetischen Auslegung der Vorrichtung 1 das magnetische Feld derart gedreht wurde, dass die daraus resultierende und auf die Elektrode wirkende Lorentz-Kraft um 360° gedreht wurde. Durch die sich ständig ändernde Ausrichtung der Lorentz-Kraft bzw. einer damit verbundenen, auf den Leiter 3 wirkenden Auslenkkraft, die durch das sich räumlich ändernde Magnetfeld erzeugt wurde, ist bspw. aus einer ovalen Form der Austrittsöffnung 19 des Werkstücks 15 links eine kreisförmige Austrittsöffnung 25 des Lochs in dem Werkstück 21 rechts, das eine große Konizität aufweist, bereitstellbar.

Neben einer prozesstechnischen Auslegung der Vorrichtung 1, also dem Umstand, dass sich der Strom durch den Leiter 3 zeitlich verändert und das Magnetfeld sich ggf. in zwei Raumrichtungen senkrecht zu dem Leiter 3 bewegt, ist vorgesehen, dass über Abstände y(o) und y(u) eine Schwingungsanregung des Endes 7 des Leiters 3 reguliert wird. Durch geeignete Wahl dieser Abstände y(o) und y(u) können Größen der in das Werkstück zu bohrenden Löcher quantitativ beeinflusst werden. Dabei können sowohl für die Eintrittsöffnungen sowie für Austrittsöffnungen Maße für große und kleine Halbachsen bei elliptischen Öffnungen oder Radien für kreisrunde Öffnungen eingestellt werden. Bei Durchführung des Verfahrens können die Magnete 15 Drehungen mit einer beliebigen Drehzahl ausführen.

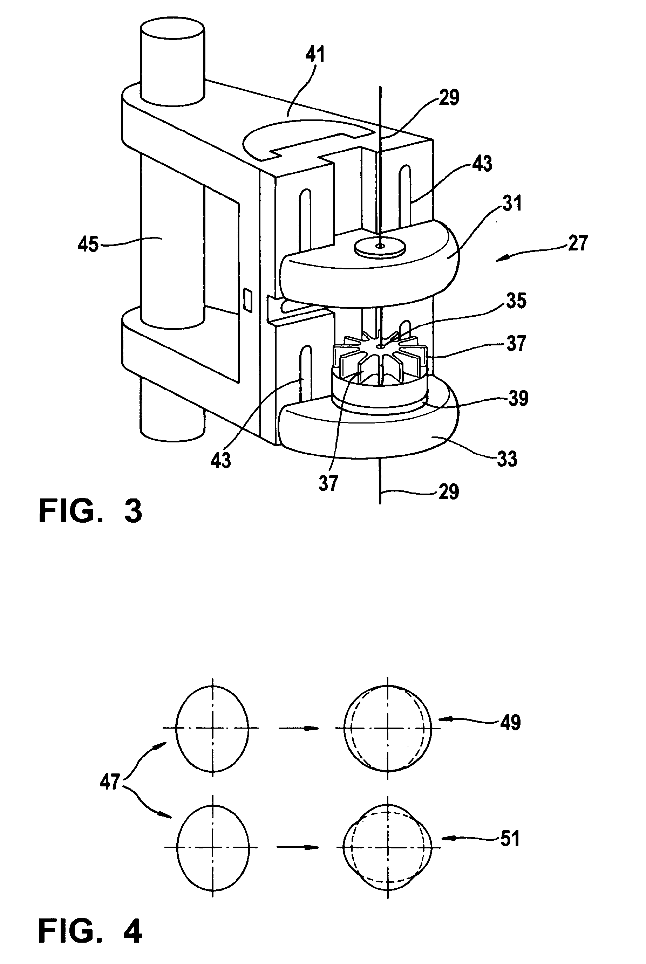

Figur 3 zeigt in schematischer Darstellung eine weitere Vorrichtung 27 zur Realisierung des Verfahrens bzw. zur technischen Umsetzung der in Figur 1 gezeigten Vorrichtung. Eine drahtförmige Elektrode 29, die in Figur 3 nur abschnittsweise dargestellt ist, ist zwischen einer oberen Führung 31 und einer unteren Führung 33 geführt. Des weiteren ist die Elektrode 29 durch eine Öffnung 35, die von mehreren, nicht weiter dargestellten Magneten umgeben ist, geführt. Außerdem sind Schaufeln 37 einer Luftturbine, die zum Antrieb eines Rotors 39 ausgebildet sind, um die Öffnung 35 herum drehbar angeordnet.

Die beiden Führungen 31, 33 sind an einer Halteeinrichtung 41 verschiebbar befestigt. Eine Verschiebung der Führungen 31, 33 ist entlang der Schienen 43 möglich. Die Halteeinrichtung 41 ist an einer Stange 45 befestigt. Die hier gezeigte Vorrichtung 27 kann in jede herkömmliche Erodiermaschine eingebaut und derart betrieben werden, dass aufgrund einer Drehung der Schaufeln 37, ein Ende der Elektrode 29, das einem in Figur 3 nicht dargestellten Werkstück zugewandt ist, relativ zu diesem Werkstück eine Drehbewegung ausführt und in Gegenwart einer Bearbeitungsflüssigkeit, wobei durch die Elektrode 29, die als drahtförmiger Leiter ausgebildet ist, ein Strom fließt, in das Werkstück ein konisches Loch bohrt.

In der Figur 4 sind weitere Formen für Austrittsöffnungen 47, 49, 51 von Löchern gezeigt, die durch ein erosives Metallbearbeitungsverfahren mit einer der Vorrichtungen 1 oder 27 aus den Figuren 1 bzw. 3 herstellbar sind.

Dabei sind jeweils links Austrittsöffnungen 47 gezeigt, die durch einen Einfluss eines stationären Magnetfelds und eines veränderlichen Stroms innerhalb des Leiters hergestellt worden sind und einen weitgehend ovalen oder elliptischen Querschnitt aufweisen.

Durch Vergrößerung eines Abstands zwischen der unteren Führung in der der Leiter geführt ist und dem Werkstück ist es möglich, auch an einer Austrittsseite die ovalen Austrittsöffnungen 47 entsprechend der wirkenden Lorentz-Kräfte im Magnetfeld herzustellen. Hierzu muss lediglich der Abstand y(o) der unteren Führung im Verhältnis zu einer Tiefe der Bohrung kontinuierlich reduziert werden. Eine Konizität des Lochs verhält sich direkt proportional zur Auslenkkraft im Magnetfeld und einer Tiefe der Bohrung.

Eine Kombination einer translatorischen Bewegung der oberen Führung und einer rotatorischen Bewegung des Magnetfelds macht bzgl. einer Konizität, Zylindrizität und dergleichen weitere Lochformen möglich.

In Figur 4 ist hierbei die obere, rechts abgebildete Austrittsöffnung 49 durch Rotation des Magnetfelds aus der unter einem stationären Magnetfeld gebohrten Austrittsöffnung 47 oben links hervor. Die rechts unten abgebildete Austrittsöffnung 51 entsteht, ausgehend von der Austrittsöffnung 47 links unten, durch ein sich in 90°-Schritten drehendes Magnetfeld. Diese Austrittsöffnung 51 wurde in zwei Phasen gebohrt, wobei das Ende des Leiters Schwingungen in zwei um 90° gedrehten Richtungen mit jeweils derselben Amplitude ausführte.

Mit dem vorliegenden Verfahren bzw. der vorliegenden Vorrichtung ist eine Lochbearbeitung für Einspritzsysteme wie z.B. für Düsen von Dieseleinspritzsystemen oder von Spritzlochscheiben für Einspritzventile möglich.

## Patentansprüche

1. Verfahren zum Bearbeiten eines Werkstücks (5) mit einem Leiter (3, 29), der entlang seiner Längsachse von einem sich zeitlich verändernden Strom durchflossen wird und durch eine obere Führung (11, 31) und eine untere Führung (13, 33) geführt wird, zwischen denen ein Magnetfeld erzeugt wird, wobei sich die obere Führung (11, 31) in einem Abstand y(o) oberhalb des Magnetfelds und die untere Führung (13, 33) in einem Abstand y(u) unterhalb des Magnetfelds befindet,
**dadurch gekennzeichnet, dass** mindestens einer der beiden Abstände y(o), y(u) verändert wird so dass durch geeignete Wahl jeweils einer Position der unteren und der oberen Führung eine Amplitude der Bewegung des Leiters zwischen den beiden Führungen und demnach auch eine Amplitude der Bewegung des Endes des Leiters eingestellt wird.

2. Verfahren nach Anspruch 1, bei dem das Magnetfeld gedreht wird.

3. Verfahren nach Anspruch 1 oder 2, bei dem durch eine Wahl der beiden Abstände y(o), y(u) eine Amplitude einer Bewegung des Endes (7) des Leiters (3, 29) reguliert wird.

4. Verfahren nach einem der voranstehenden Ansprüche, bei dem zwischen dem Ende (7) des Leiters (3, 29) und der Bearbeitungsstelle des Werkstücks (5) ein elektrisches Feld anliegt und an der Bearbeitungsstelle in Gegenwart einer Bearbeitungsflüssigkeit von dem Werkstück (5) Material abgetragen wird.

5. Verfahren nach einem der voranstehenden Ansprüche, bei dem durch den Leiter (3, 29) ein gepulster Strom geleitet wird.

6. Verfahren nach einem der voranstehenden Ansprüche, bei dem die Richtung des Stroms geändert wird.

7. Vorrichtung zum Bearbeiten eines Werkstücks (5) mit einem Leiter (3, 29), einer oberen Führung (11, 31) und einer unteren Führung (13, 33), durch die der Leiter (3, 29) geführt ist und zwischen denen sich ein durch mindestens einen Magneten (15) erzeugtes Magnetfeld befindet, wobei die obere Führung (11, 31) in einem Abstand y(o) oberhalb des Magnetfelds und die untere Führung (13, 33) in einem Abstand y(u) unterhalb des Magnetfelds angeordnet ist,
**dadurch gekennzeichnet, dass** mindestens eine der beiden Führungen (11, 13, 31, 33) derart beweglich angeordnet, ist dass mindestens einer der beiden Abstände y(o), y(u) verändert werden kann.

8. Vorrichtung nach Anspruch 7, die mindestens einen drehbaren Magneten (15) aufweist.

9. Vorrichtung nach Anspruch 7 oder 8, bei der eine Quelle einen sich zeitlich verändernden, durch den Leiter (3, 29) fließenden Strom erzeugt.

10. Vorrichtung nach Anspruch 9, bei der die Quelle eine parallele Anordnung eines statischen Impulsgenerators mit Kondensatoren aufweist und über einen Schwingkreis einen gepulsten Strom erzeugt.

## Claims

1. Method for machining a workpiece (5) having a conductor (3, 29) through which a current which changes over time flows along the longitudinal axis of the said conductor, and which conductor is routed through an upper guide (11, 31) and a lower guide (13, 33) between which a magnetic field is generated, wherein the upper guide (11, 31) is at a distance y(o) above the magnetic field and the lower guide (13, 33) is at a distance y(u) below the magnetic field, **characterized in that** at least one of the two distances y(o), y(u) is changed so that an amplitude of the movement of the conductor between the two guides, and accordingly also an amplitude of the movement of the end of the conductor, is set by suitably selecting a position of the lower and of the upper guide in each case.

2. Method according to Claim 1, in which the magnetic field is rotated.

3. Method according to Claim 1 or 2, in which an amplitude of a movement of the end (7) of the conductor (3, 29) is regulated by selecting the two distances y(o), y(u).

4. Method according to one of the preceding claims, in which an electrical field is applied between the end (7) of the conductor (3, 29) and the machining point of the workpiece (5), and material is removed from the workpiece (5) at the machining point in the presence of a machining liquid.

5. Method according to one of the preceding claims, in which a pulsed current is conducted through the conductor (3, 29).

6. Method according to one of the preceding claims, in which the direction of the current is changed.

7. Apparatus for machining a workpiece (5) having a conductor (3, 29), an upper guide (11, 31) and a lower guide (13, 33), through which upper guide and lower guide the conductor (3, 29) is routed and between which there is a magnetic field which is generated by at least one magnet (15), wherein the upper guide (11, 31) is arranged at a distance y(o) above the magnetic field and the lower guide (13, 33) is arranged at a distance y(u) below the magnetic field, **characterized in that** at least one of the two guides (11, 13, 31, 33) is arranged such that it can be moved in such a way that at least one of the two distances y(o), y(u) can be changed.

8. Apparatus according to Claim 7 which has at least one rotatable magnet (15).

9. Apparatus according to Claim 7 or 8, in which a source generates a current which changes over time and flows through the conductor (3, 29).

10. Apparatus according to Claim 9, in which the source has a parallel arrangement of a static pulse generator with capacitors and generates a pulsed current via a resonant circuit.

## Revendications

1. Procédé de traitement d'une pièce (5) par un conducteur (3, 29) qui est traversé dans le sens de son axe longitudinal par un courant variant dans le temps et qui est guidé par un guide supérieur (11, 31) et un guide inférieur (13, 33) entre lesquels est formé un champ magnétique,
le guide supérieur (11, 31) étant situé à une distance y(o) au-dessus du champ magnétique et le guide inférieur (13, 33) à une distance y(u) en dessous du champ magnétique,
**caractérisé en ce que**
au moins l'une des deux distances y(o), y(u) est modifiée de telle sorte que l'amplitude dudit déplacement du conducteur entre les deux guides et par conséquent aussi l'amplitude du déplacement de l'extrémité du conducteur soient ajustées par sélection appropriée de la position du guide inférieur et de celle du guide supérieur.

2. Procédé selon la revendication 1, dans lequel le champ magnétique est tournant.

3. Procédé selon les revendications 1 ou 2, dans lequel une sélection des deux distances y(o), y(u) régule l'amplitude du déplacement de l'extrémité (7) du conducteur (3, 29).

4. Procédé selon l'une des revendications précédentes, dans lequel un champ électrique est appliqué entre l'extrémité (7) du conducteur (3, 29) et l'emplacement de traitement de la pièce (5) et du matériau est enlevé de la pièce (5) à l'emplacement de traitement et en présence d'un liquide de traitement.

5. Procédé selon l'une des revendications précédentes, dans lequel un courant pulsé est amené dans le conducteur (3, 29).

6. Procédé selon l'une des revendications précédentes, dans lequel la direction du courant est modifiée.

7. Dispositif de traitement d'une pièce (5) par un conducteur (3, 29), un guide supérieur (11, 31) et un guide inférieur (13, 33) par lesquels le conducteur (3, 29) est guidé et entre lesquels est situé un champ magnétique formé par au moins un aimant (15),
le guide supérieur (11, 31) étant situé à une distance y(o) au-dessus du champ magnétique et le guide inférieur (13, 33) à une distance y(u) en dessous du champ magnétique,
**caractérisé en ce que**
au moins l'un des deux guides (11, 13, 31, 33) est disposé de manière à pouvoir être déplacé de telle sorte qu'au moins l'une des deux distances y(o), y(u) puisse être modifiée.

8. Dispositif selon la revendication 7, présentant au moins un aimant rotatif (15).

9. Dispositif selon les revendications 7 ou 8, dans lequel la source produit dans le conducteur (3, 29) un courant qui varie dans le temps.

10. Dispositif selon la revendication 9, dans lequel la source présente un agencement parallèle d'un générateur statique d'impulsions et de condensateurs et produit un courant pulsé par l'intermédiaire d'un circuit oscillant.
